Europäisches Patentamt

European Patent Office

Office européen des brevets

(11) Publication number: **0 403 441**
**A2**

(12) **EUROPEAN PATENT APPLICATION**

(21) Application number: 90830170.8

(51) Int. Cl.⁵: **C13F 1/02**

(22) Date of filing: **19.04.90**

(30) Priority: **14.06.89 IT 1252189**

(43) Date of publication of application:
**19.12.90 Bulletin 90/51**

(84) Designated Contracting States:
**AT BE DE DK ES FR GB**

(71) Applicant: **ERIDANIA ZUCCHERIFICI
NAZIONALI S.P.A.**
**Corso A. Podestà 2**
**I-16128 Genoa(IT)**

Applicant: **TEROM S.P.A.**
**Via Nuova 16**
**I-40050 Funo BO(IT)**

(72) Inventor: **Romoli, Pier Romolo**
**Via Riva Reno 58**
**I-40100 Bologna(IT)**

(74) Representative: **Galletti di San Cataldo, Vettor,
Dr.**
**Via XX Settembre 36**
**I-16121 Genova(IT)**

(54) **Process and device for the continuous enlargement of the pre-formed crystals of massecuites.**

(57) The subject matter of this invention consists of a device and of a process for the treatment of mas-secuites, in order to increase the size of the crystals contained in them.

According to the invention, downstream from the boiling pans (20) and above the centrifuging means (40), it has, in the following order:

- an intermediate chamber (60), connected to a source of vacuum, equipped with heating means (67) and stirring means (68),

- at least one pair of superimposed cells (80, 90, 100), positioned in series in respect of one another and of the foregoing intermediate chamber (60). Each of said cells has differentiated stirring means (82, 83; 92, 93; 102, 103), means for heat condition-ing, and means (85, 95, 105) connecting them to a source of vacuum.

Fig 1

## Process and device for the continuous enlargement of the pre-formed crystals of massecuites

The subject-matter of this invention consists of a process and of the relevant device for continuous enlargement of the pre-formed crystals of massecuites.

The treatment of massecuites in sugar-processing plants, according to the known processes currently used, may be schematically described as follows:

The massecuites are removed from the boiling pans at a temperature of about 75° C, and are then sent to a centrifuge where the crystals forming in them are separated from the mother liquors, the latter being submitted to further treatment.

According to a previous patent deposited by the same Proprietors (Italian patent no. 1.172.938), the massecuites from the boiling pans are vacuum-treated with a continuous crystal-enlargement process consisting of at least two stages, in each of which the massecuite undergoes, in height, at least two stirring stages: at the upper level the massecuite is stirred three-dimensionally and in this stage enlargement of the crystals occurs; at the lower level the massecuite is submitted to a substantially flat stirring state having the purpose of allowing the larger crystals to be decanted without them stagnating excessively.

According to said previous invention of the Proprietors, enlargement of the crystals is caused by the lowering of the temperature as a consequence of the depression existing inside the apparatus.

The device for achieving the process described above, according to the aforesaid patent, has at least two cells in series, each of which is connected to a source of vacuum and equipped with heat conditioning means, in each of which there are two superimposed bladed mixers: the upper one is able to impress on the massecuite a three-dimensional movement, while the second, which has a practically infinite pitch, is able to generate in the massecuite only a substantially horizontal mixing movement.

The purpose of this invention is to increase the performance of the plant by arranging, immediately downstream from the massecuite boiling pans (whether continuous or otherwise) and immediately upstream from said vacuum cells, equipped with differentiated mixing means, an intermediate treatment chamber in which the massecuite is heated while the chamber is in communication with a source of vacuum.

In this way the concentration of the massecuite coming from the boiling pans is increased, improving the performance of the vacuum cells in which the crystals undergo further enlargement, as described and claimed in said Italian patent no. 1.172.938. The intermediate heating chamber is equipped with stirring means, and has steam pipes able to supply the necessary heat.

The basic features of the invention are described below, with specific reference to the attached drawings.

Figure 1 is a general diagram of the system according to the invention;

Figure 2 is a partial enlargement of the above figure, and shows the intermediate chamber located between the boiling pans and the device claimed in the Italian patent belonging to the same Proprietors.

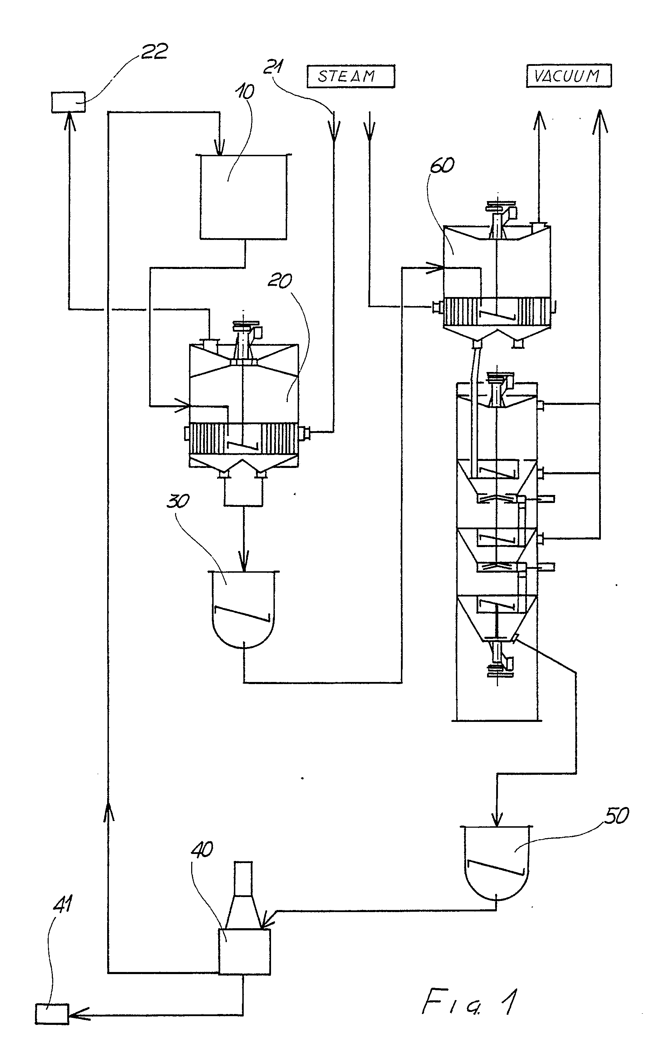

With specific reference to figure 1, 10 indicates a tank containing the juice to be crystallised, from which it is fed continuously to a vacuum boiling pan indicated by 20, in which the heating steam arrives from 21, while 22 indicates the pipe for removal of the steam also containing the vaporised water originally contained in the juice.

According to a known technique, the juice to be crystallised may be fed to other boiling pans located in parallel to pan 20 and not indicated in figure 1. The concentrated juice (massecuite) is fed to the mixer 30, and from here, in the known traditional systems, the massecuite enters directly a centrifuge 40 which separates the crystals from the mother liquor: the crystals are sent through line 41 to be collected, while the mother liquid is at least partly returned to the tank 10.

According to Italian patent no. 1.172.938 mentioned above, the massecuites coming from the boiling pans are sent to a series of vacuum cells, indicated as a whole as MET; here the size of the crystals is enlarged and after passing through the mixer 50, the mixture of crystals and mother liquors is sent to the aforementioned centrifuge 40.

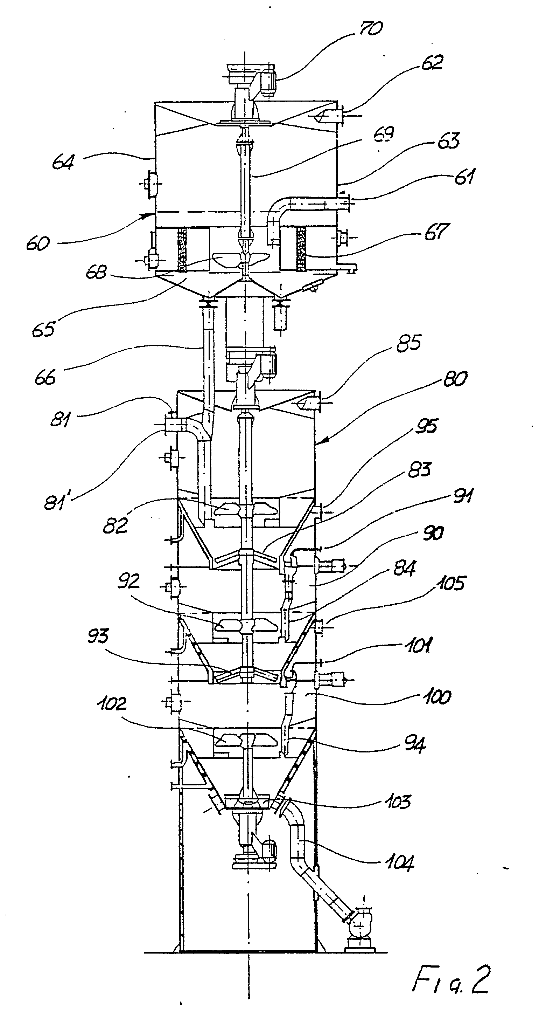

According to this invention, downstream from the last boiling pan and upstream from the cells in which the crystals are enlarged, indicated as MET, there is an intermediate chamber 60 in which the massecuite undergoes further concentration by heating and by evaporation, also by effect of a source of vacuum connected to it. As a whole, the devices indicated in figure 1 as 60, the intermediate chamber and MET, covered by this invention, are illustrated in detail in figure 2.

The intermediate chamber 60 has a pipe for feeding the massecuite 61 and a pipe for removing the steam 62 connected to a source of vacuum not shown in the figure. This chamber has an upper cylindrical part 64 and a lower conical part 65 acting as a collecting hopper at the bottom of which there are one or more pipes 66 for draining the concentrated massecuite. 63 indicates a pipe for feeding syrup. Above the conical part 65 there is a set of steam-fed heating pipes 67 having a ring-shaped configuration to leave the necessary space for a mixer 68 and its shaft 69, controlled by a motor 70.

The massecuite from the output pipes 66 is fed into a first cell, 80, with a vacuum, equipped with heat conditioning and stirring means, in which the dimensions of the crystals of the massecuite undergo a first phase of enlargement. Syrup which is already concentrated or mother liquor is added through the pipe 81 to the massecuite coming from 66, in quantities sufficient to maintain the necessary state of fluidity and composition of the mass being stirred. The pipe 81 is normally closed, and is fed with the massecuite only when, exceptionally, there is reason to exclude the first stage of the system.

Stirring of the massecuite inside the first cell 80 is achieved by two superimposed bladed stirrers, 82 and 83: the first impresses on the massecuite a three-dimensional movement capable of facilitating sedimentation of the largest crystals, while the second, with an infinite pitch, is able to impress on the larger crystals which have collected at the bottom of the cell only a mixing movement which prevents them from stagnating.

Cells 90 and 100, arranged in series with cell 80, have the same function and are equipped with the same components: pipes 91 and 101 for feeding the syrup, upper mixers 92 and 102, lower mixers 93 and 103. Furthermore, each of the three cells in series 80, 90 and 100, is equipped with output pipes 84, 94 and 104, the last of which feeds the centrifuge 40 of figure 1, through the mixer 50. The three cells 80, 90 and 100 are also equipped with means connecting them to a source of vacuum 85, 95, 105. From a plant engineering point of view, the intermediate chamber 60 may be placed above the series of cells 80, 90 and 100 in which the crystals are enlarged, supplying a massecuite at a higher temperature which allows the cells themselves to work more effectively, also considering the greater temperature change which is made available to the cells 80, 90 and 100.

The chamber 60 works continuously, like cells 80, 90 and 100. It follows that operation is easily controlled as the characteristics of the material used vary. The procedure described for the massecuite originating from sugar juices may be applied to and used also for any process entailing crystallisation by evaporation of mother liquors, of various origins.

## Claims

1. Process for the continuous enlargement of the pre-formed crystals of massecuites characterised by the fact that the massecuite coming from the boiling pans undergoes heating in a vacuum while it is continuously stirred; in which the massecuite treated in this way is progressively cooled, in a vacuum, while it undergoes several consecutive stages of differentiated mixing; said differentiated mixing takes place on two levels: in the first level this mixing is three-dimensional, in order to facilitate enlargement of the crystals, while in the second said mixing takes place on a horizontal plane in order to facilitate natural decanting of the largest crystals, at the same time preventing them from stagnating.

2. Device suitable for implementing the process according to claim 1, characterised by the fact that downstream from the boiling pans (20) and upstream from the means of centrifugation (40), it has, in this order:
- an intermediate chamber (60), connected to a source of vacuum and equipped with heating means (67) and stirring means (68),
- at least one pair of superimposed cells (80, 90, 100), arranged in series in respect of one another and in respect of the aforesaid intermediate chamber (60); in which each of these cells (80, 90, 100) is equipped with differentiated stirring means (82, 83; 92, 93; 102, 103) and with heat conditioning means, as well as with means for connection to a source of vacuum (85, 95, 105); in which said means of differentiated stirring envisage a first upper bladed-type stirrer able to impress on the massecuite a three-dimensional movement, and a second, lower bladed-type stirrer, able to impress on the massecuite a substantially horizontal movement.

3. Device according to the foregoing claim, characterised by the fact that the body of the massecuite inside each cell (80, 90, 100) and inside the intermediate chamber (60) is controlled by the addition of syrup as appropriate, through the ducts (63, 81, 91, 101).

4. Device according to the foregoing claims, characterised by the fact that said means of heating (67) of the intermediate chamber are implemented by means of a ring-shaped rim of pipes hit by steam from outside.

STEAM

VACUUM

Fig. 1

Fig. 2